# EUROPÄISCHE PATENTSCHRIFT

(11) **EP 1 713 647 B1**
(45) Veröffentlichungstag und Bekanntmachung des Hinweises auf die Patenterteilung: **27.03.2013**
(21) Anmeldenummer: 05715242.3
(22) Anmeldetag: 02.02.2005
(51) Int. Cl.: B60B 39/10

(54) **EINRICHTUNG ZUR ÜBERWACHUNG DES FLUSSES VON STREUGUT IN FAHRZEUGEN**
DEVICE FOR MONITORING THE FLOW OF A SPREADING SUBSTANCE IN A VEHICLE
DISPOSITIF POUR SURVEILLER L'ECOULEMENT D'UNE MATIERE D'EPANDAGE DANS UN VEHICULE

(30) Priorität: 11.02.2004 AT 2052004
(43) Veröffentlichungstag der Anmeldung: 25.10.2006
(73) Patentinhaber: FAIVELEY TRANSPORT, 93200 Saint-Denis (FR)
(72) Erfinder: BARTLING, Werner, 31008 Elze (DE)
(74) Vertreter: Sonn & Partner Patentanwälte
(86) Internationale Anmeldenummer: PCT/EP2005/001024
(87) Internationale Veröffentlichungsnummer: WO 2005/077679

(56) Entgegenhaltungen:
- DE-A1- 2 214 313
- US-A- 2 016 419

## Beschreibung

Die Erfindung betrifft eine Einrichtung zur Überwachung des Flusses von Streugut bei Schienenfahrzeugen nach dem Oberbegriff des Patentanspruchs 1.

Sandstreusysteme sind sicherheitsrelevante Systeme in Schienenfahrzeugen. Sie dienen zur Erhöhung der Kontraktion zwischen Rad und Schiene, um das Reibungsverhältnis zu verbessern. Bei Gefahrenbremsungen bzw. unzureichender Traktion beim Vortrieb des Fahrzeuges werden die Sandstreusysteme über die Brems- bzw. Antriebstechnik automatisch angesteuert, insbesondere bei modernen Fahrzeugtypen. Daraus resultiert, dass die Sandstreusysteme blitzschnell reagieren müssen, und dementsprechend auch das Streumittel zwischen Rad und Schiene gefördert werden muss. Die Sandförderung erfolgt bei zeitgerechten Schienenfahrzeugen bzw. Sandstreusystemen mittels Druckluftförderung. Das Streumittel wird von einem Vorratsbehälter über eine Dosiereinrichtung und einen Injektor in einen Luftstrom geleitet und mit diesem schwebend in den Spalt zwischen Rad und Schiene gefördert. Eine Kontrolle der Funktion der Sandstreusysteme wird üblicherweise bei Stillstand des Fahrzeuges durch Handschaltung betätigt und mit anschließender optischer Kontrolle, ob Streumittel an den jeweiligen Rändern ausgetragen wird, verbunden. Dieser Vorgang ist abhängig von der Fahrzeuglänge und sehr zeitaufwändig, und für eine wirksame Funktionsüberwachung im Betriebszustand unzureichend. Der Nachteil der bekannten Systeme besteht darin, dass keine Möglichkeit vorhanden ist, die Funktion der Sandstreuung während des Fahrbetriebes zu überwachen.

Eine Einrichtung der eingangs erwähnten Art ist durch die US 2 016 419 A bekannt geworden. Die bekannte Einrichtung ist für Busfahrzeuge bestimmt.

Aufgabe der Erfindung ist es, ein Überwachungssystem zu schaffen, welches die Sandstreuung während des Fahrbetriebes vorzugsweise automatisch überwacht und bei jedem Streugutfluss eine zuverlässige und eindeutige Überwachung der Funktion ermöglicht. Wenn das System mit einer Anzeigevorrichtung im Führerstand des Fahrzeuges verbunden ist, besteht die Möglichkeit, ein sicheres Kontrollsignal dem Fahrzeuglenker zu übermitteln. Durch die Maßnahme, dass die. Fotosensoren im Anschluss an einen Injektor vorgesehen sind, ist eine platzsparende Bauweise des Systems möglich.

Nach einem weiteren Merkmal der Erfindung sind die Fotosensoren einander gegenüberliegend in einer Gewindemuffe untergebracht, welche einerseits mit einem Injektorgehäuse und andererseits mit einem Ausgangsstutzen für das Streugut verbunden ist.

Nach einem weiteren Merkmal der Erfindung ist die Muffe an einem Anschlussteil aufgeschraubt, welches an den Injektor angeschlossen ist. Dadurch ergibt sich eine leichte Einbaufähigkeit auch bei unterschiedlichen Einbauverhältnissen.

Nach einem weiteren Merkmal der Erfindung weist das Überwachungssystem ein korrosionsfestes Aluminiumgehäuse auf. Dadurch ist das erfindungsgemäße System auch bei extremen Betriebsbedingungen mechanisch, chemisch und thermisch uneingeschränkt einsatzfähig und funktionssicher.

Nach einem weiteren Merkmal der Erfindung sind die beiden Fotosensoren (Sender und Empfänger) mit Faser-Lichtleitern versehen, wodurch es möglich ist, dass die Auswerteelektronik in einem Fahrzeuginnenraumbereich günstig platziert werden kann.

Das erfindungsgemäße Kontrollsystem ist im Bereiche der Auswerteelektronik mit einstellbarer Funktion versehen. Dadurch besteht die Möglichkeit, das Kontrollsystem auch an unterschiedliche Sandarten bzw. erforderliche Streumengen der Zeit und bzw. oder Streckeneinheit in einfacher Weise anzupassen.

Das erfindungsgemäße System ist mit geringem Aufwand leicht in jedes Fahrzeug einbaufähig und nachrüstbar. Ebenso ist das System leicht ausbaufähig, falls eine Systemstörung eintreten sollte. Schließlich ist auch eine weitgehende Wartungsfreiheit und geringer Kostenaufwand für den Aufbau und Betrieb zu erwähnen.

In der Zeichnung ist ein Ausführungsbeispiel des Erfindungsgegenstandes dargestellt.

Es zeigen:
Fig. 1 den Aufbau des Systems in schematischer Darstellung; und
Fig. 2 den Aufbau der Anlage im Bereich der Fotosensoren in größerem Maßstab und axialem Längsschnitt.

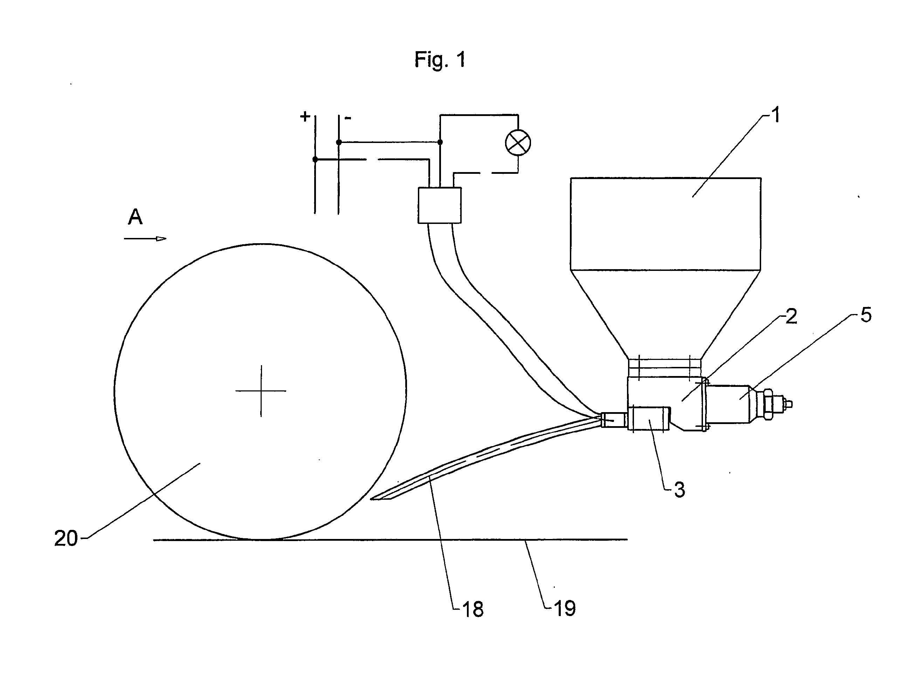

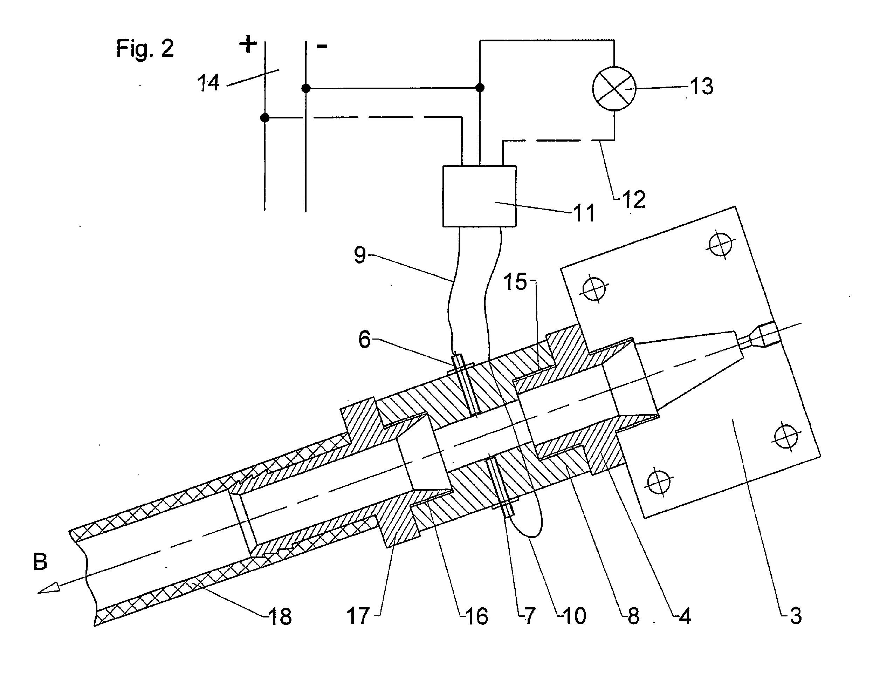

Die Sandstreueinrichtung besitzt, wie aus Fig. 1 ersichtlich, einen Vorratsbehälter 1, aus welchem das Streugut über eine Dosiereinrichtung 2 und einen daran anschließenden Injektor 3 einem an diesen angeschlossenen, z.B. angeschraubten Anschlussteil 4 (Fig. 2), zugeführt wird. Die Dosiereinrichtung 2 ist mit einem Druckluftanschluss 5 ausgestattet.

Wie aus Fig. 2 im Detail ersichtlich ist, sind einander gegenüberliegend zwei Sensoren, und zwar ein Sender 6 sowie ein Empfänger 7 in einem Gehäuse 8 vorgesehen, beispielsweise in dieses eingeschraubt, welche über Lichtleiter 9 und 10 an eine Einrichtung 11 zur Auswertung der Elektronik angeschlossen sind, aus welcher ein Ausgang 12 zu einer Schaltanzeige 13, z.B. über LED oder Display, im Fahrzeugführerstand führt. Das System wird vorzugsweise über eine 24 V (DC) aus dem Fahrzeugnetz, welches mit Bezugszeichen 14 angedeutet ist, versorgt.

Das Gehäuse 8 ist im vorliegenden Falle als Muffe ausgebildet, welche beiderseitig mit Innengewinde 15, 16 ausgestattet ist, mit welchem das Gehäuse 8 eingangsseitig an den Injektor 3 und ausgangsseitig an einen Anschlussteil 17 aufgeschraubt ist, der seinerseits ausgangsseitig in eine Sandförderleitung 18 eingesetzt ist, die, wie aus Fig. 1 ersichtlich, bei einer mit Pfeil A angedeuteten Fahrtrichtung zwischen Schiene 19 und Rad 20 führt.

Das erfindungsgemäße System kann mit der Fahrzeugausrüstung funktionsbereit geschaltet werden.

Der mit Pfeil B in Fig. 2 angedeutete Strom des Streugutes wird zwischen den beiden Fotosensoren 6, 7 durchgeführt und durch diese erkannt.

Über die beiden Lichtleiter 9 und 10 werden die entsprechenden Signale an die Einrichtung zur Auswertung der Elektronik übermittelt und in ein Schaltsignal umgewandelt.

Das Schaltsignal kann auf die LED oder die Display-Anzeige im Fahrzeugführerstand übermittelt bzw. angezeigt werden.

Ferner besteht die Möglichkeit, im Störfall eines einzelnen Systems eine Störmeldung mit dem Schaltsignal zu verknüpfen, wobei die Meldung z.B. auf akustischem oder optischem Wege erfolgen kann. Dadurch wird der Fahrzeugführer über die aktuelle Betriebssituation unmittelbar informiert, wodurch es möglich ist, die Funktion des Streusystems während des Fahrbetriebes einfach und zuverlässig automatisch zu überwachen, und damit zur Verkehrssicherheit der Fahrzeuge bzw. des Fahrbetriebes wesentlich beizutragen.

Selbstverständlich besteht die Möglichkeit, dieses Überwachungssystem nicht nur für Schienenfahrzeuge sondern allgemein zur Überwachung des Flusses eines Streugutes für jede Fahrspur auch bei Straßenfahrzeugen z.B. im Winter auf Schnee und eisbedeckten Fahrbahnen heranzuziehen, wobei das Streugut, vor allem Sand, in Frage kommt. Im weitesten Sinne der Erfindung besteht aber auch die Möglichkeit, andere Fraktionsmittel oder Reinigungsmittel, z.B. Flüssigkeit mit Frostschutz, zu überwachen.

## Patentansprüche

1. Einrichtung zur Überwachung des Flusses von Streugut in Fahrzeugen, wobei im Bereich des Flusses eines Streugutes Sensoren (6, 7) vorgesehen sind, welche mit einer die ermittelten Daten auswertenden Einrichtung versehen sind, **dadurch gekennzeichnet, dass** die Fotosensoren (6, 7) im Anschluss an einen Injektor (3) vorgesehen sind.

2. Einrichtung nach Anspruch 1, **dadurch gekennzeichnet, dass** die Fotosensoren (6, 7) einander gegenüberliegend in einer Gewindemuffe untergebracht sind, welche einerseits mit einem Injektorgehäuse und andererseits mit einem Ausgangsstutzen für das Streugut verbunden ist.

3. Einrichtung nach Anspruch 2, **dadurch gekennzeichnet, dass** die Muffe an einen Anschlussteil (17) aufgeschraubt ist, welcher an den Injektor angeschlossen ist.

4. Einrichtung nach Anspruch 1, **dadurch gekennzeichnet, dass** die beiden Fotosensoren (6, 7) mit Faserlichtleitern (9, 10) versehen sind.

## Claims

1. A device for monitoring the flow of grit in vehicles, wherein sensors (6, 7) are provided in the region of the flow of grit which are provided with means evaluating the sensed data, **characterized in that** the photo sensors (6, 7) are provided subsequent to an injector (3).

2. The device according to claim 1, **characterized in that** the photo sensors (6, 7) are accommodated to face each other in a threaded sleeve that is connected with an injector housing, on the one hand, and with a discharge nozzle for the grit, on the other hand.

3. The device according to claim 2, **characterized in that** the sleeve is screwed onto a connecting part (17) connected to the injector.

4. The device according to claim 1, **characterized in that** the two photo sensors (6, 7) are provided with fibre-optic light guides (9, 10).

## Revendications

1. Dispositif permettant de surveiller l'écoulement d'un matériau d'épandage dans des véhicules, dans lequel des capteurs (6, 7) sont prévus dans la zone du flux d'un matériau d'épandage, lesquels sont munis d'un dispositif analysant les données déterminées, **caractérisé en ce que** les photocapteurs (6, 7) sont prévus dans le raccordement à un injecteur (3).

2. Dispositif selon la revendication 1, **caractérisé en ce que** les photocapteurs (6, 7) sont logés face à face dans un manchon fileté qui est raccordé sur un côté à un boîtier d'injecteur, et sur l'autre côté à une tubulure de sortie pour le matériau d'épandage.

3. Dispositif selon la revendication 2, **caractérisé en ce que** le manchon est vissé sur une partie de raccordement (17) qui est raccordée à l'injecteur.

4. Dispositif selon la revendication 1, **caractérisé en ce que** les deux photocapteurs (6, 7) sont munis de conducteurs à fibres optiques (9, 10).
